Europäisches Patentamt

European Patent Office

Office européen des brevets

(11) Veröffentlichungsnummer: **0 472 878 A1**

# (12) EUROPÄISCHE PATENTANMELDUNG

(21) Anmeldenummer: **91111829.7**

(22) Anmeldetag: **16.07.91**

(51) Int. Cl.5: **B62D 5/06**

(30) Priorität: **31.08.90 DE 4027541**
**08.06.91 DE 4118947**

(43) Veröffentlichungstag der Anmeldung:
**04.03.92 Patentblatt 92/10**

(84) Benannte Vertragsstaaten:
**DE FR GB IT**

(71) Anmelder: **ROBERT BOSCH GmbH**
**Postfach 30 02 20**
**W-7000 Stuttgart 30(DE)**

(72) Erfinder: **Bischof, Hubert, Dr.-Ing.**
**Im Hörnle 28**
**W-7143 Vaihingen/Enz 2(DE)**
Erfinder: **Altmann, Uwe, Dipl.-Ing.**
**Auenweg 8**
**W-7141 Schwieberdingen(DE)**
Erfinder: **Hesse, Horst, Dr. Dipl.-Ing.**
**Auberlenweg 13B**
**W-7000 Stuttgart 1(DE)**
Erfinder: **Konigorski, Ulrich-Eugen, Dr.-Ing.**
**Rathausplatz 13**
**W-7141 Möglingen(DE)**

(54) **Servolenkeinrichtung für ein Fahrzeug.**

(57) Die Servolenkeinrichtung für ein Fahrzeug weist am Lenkrad einen Handkraftsensor auf, der mit einem elektronischen Steuergerät (28) in Verbindung steht. Der doppeltwirkende Lenkzylinder (14) wird von einem elektromagnetisch betätigbaren Regelventil (12) angesteuert, das in Abhängigkeit von einem Wegsensor und dem Differenzdruck an einem Differenzdrucksensor (32) über das elektronische Steuergerät (28) entsprechend angesteuert wird und zwar derart, daß das vom Fahrer beim Lenken aufzubringende Lenkradmoment, welches den Istwert bildet, und dem Lenkmoment (berechnet über Differenzdrucksensor, Fahrgeschwindigkeit und Fahrerwunsch), welches den Sollwert für die Steuerelektronik bildet, über die stets vorhandene mechanische Rückwirkung in Abhängigkeit von der Größe des jeweils vorliegenden Lenkmoments ein entsprechend kleineres, vorgebbares bewertetes Moment über die Steuerelektronik und das Regelventil am Lenkrad (36) vermittelt.

FIG.1

EP 0 472 878 A1

## Stand der Technik

Die Erfindung geht aus von einer Servolenkung nach der Gattung des Hauptanspruchs. Derartige bekannte Servolenkungen sind noch nicht optimal ausgelegt, insbesondere im Hinblick auf die Vermittlung von Steuerkräften am Handrad, außerdem sind die Energieverluste noch zu hoch.

## Vorteile der Erfindung

Die erfindungsgemäße Servolenkeinrichtung mit den kennzeichenden Merkmalen des Hauptanspruchs hat demgegenüber den Vorteil, daß sie dem Fahrer ein sehr gutes Lenkgefühl vermittelt, geringe Energieverluste verursacht, eine einfache Anpassung an fahrzeugspezifische Gegebenheiten erlaubt und daß insbesondere auch der Bauraum sehr klein ist. Dies gilt für die Servobetätigung einer Vorderradlenkung.

Weitere vorteilhafte Ausgestaltungen der Erfindung ergeben sich aus den Unteransprüchen.

## Zeichnung

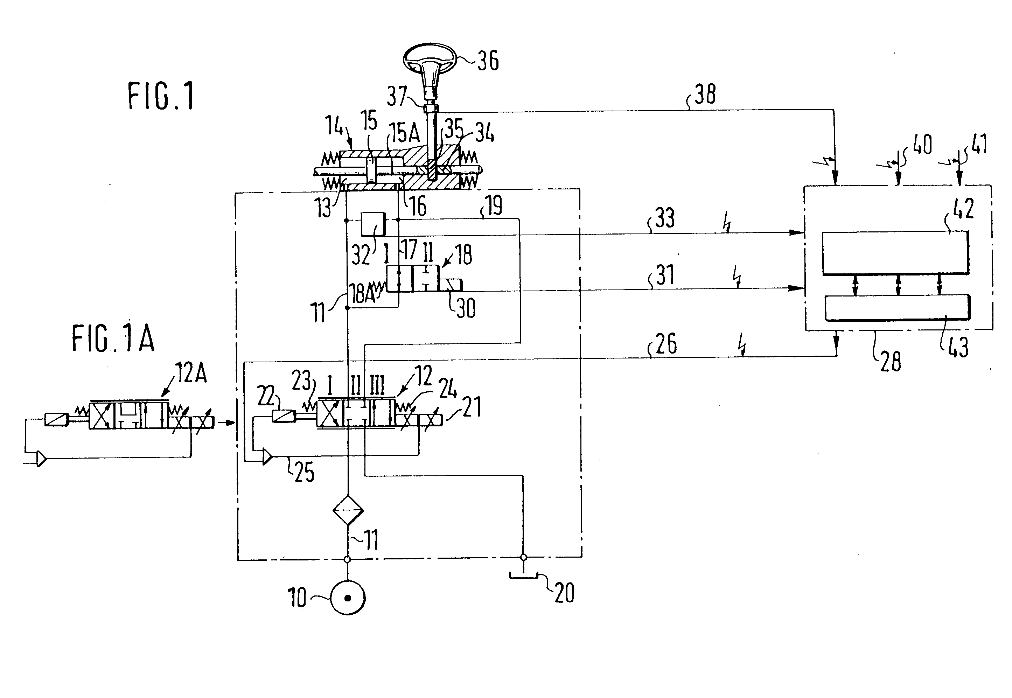

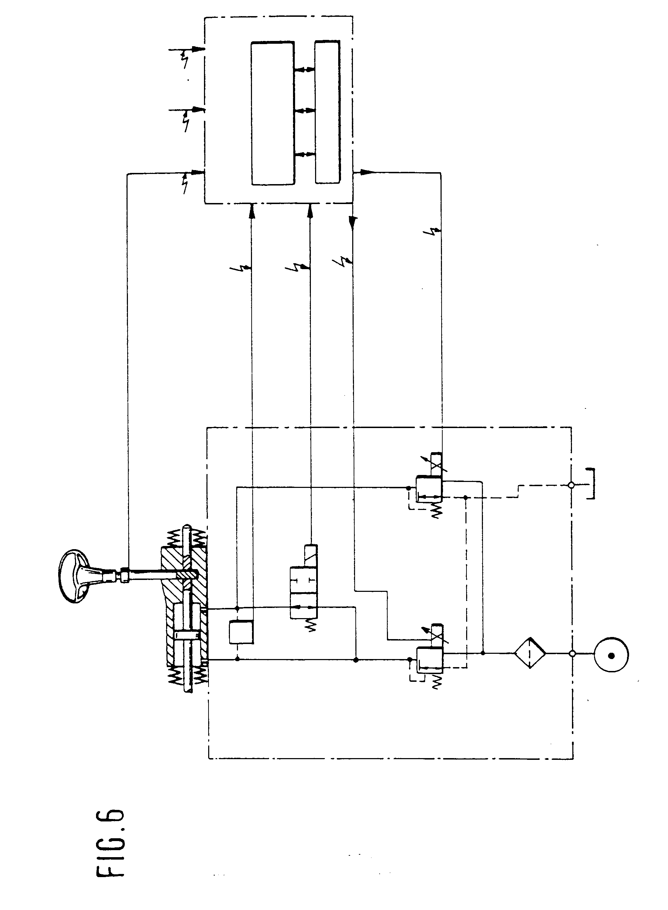

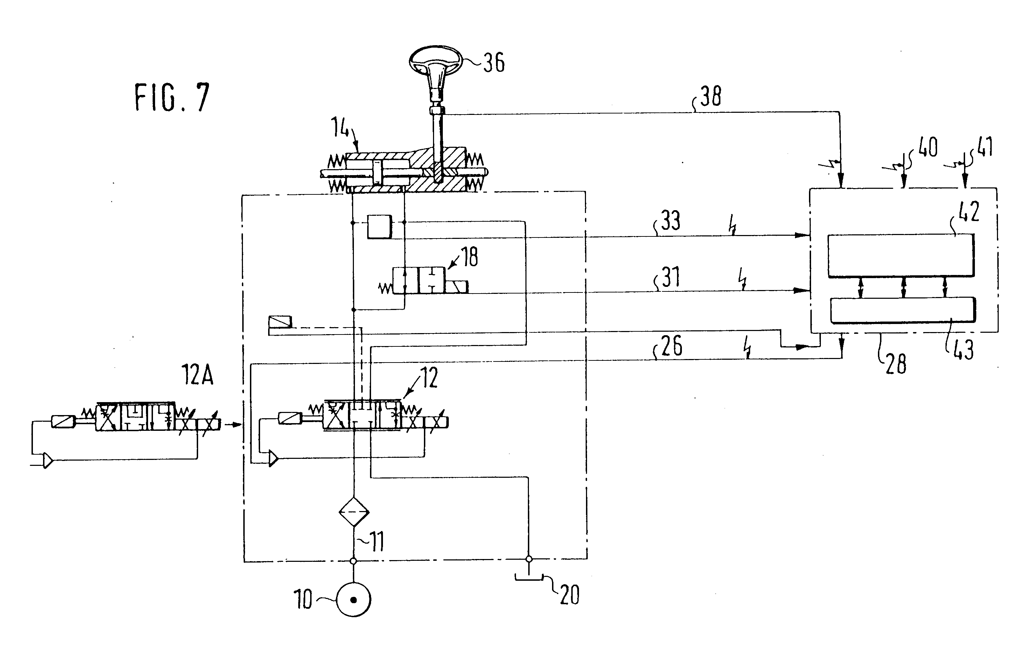

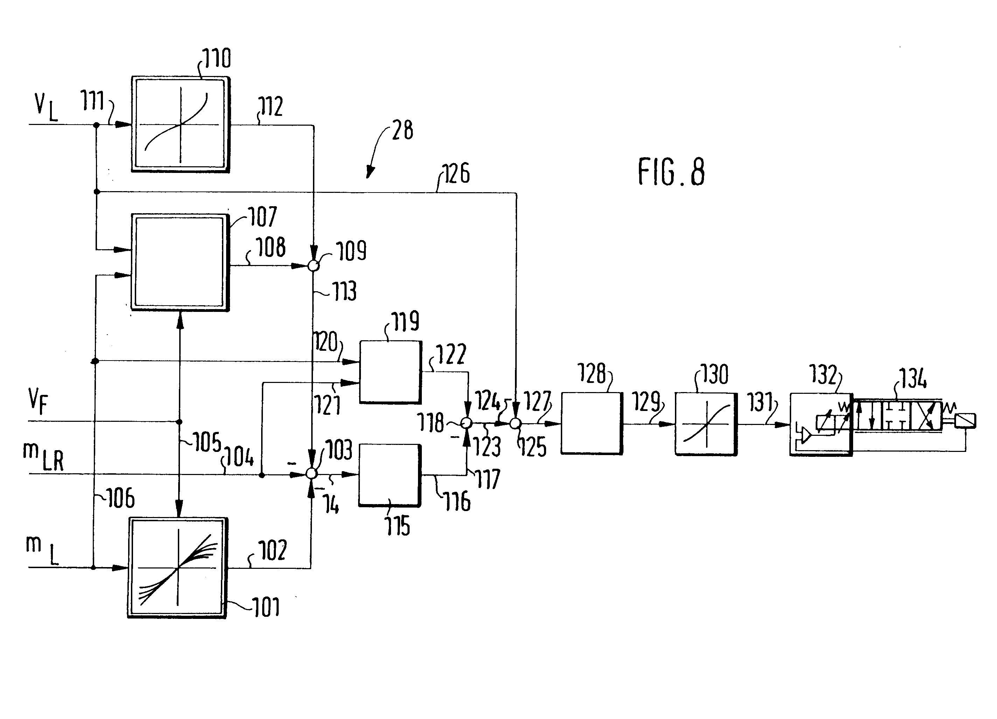

Verschiedene Ausführungsbeispiele bzw. Varianten der Erfindung sind in der nachfolgenden Beschreibung und Zeichnung wiedergegeben. Letztere zeigt in den Figuren 1 bis 7 Servolenkungseinrichtungen für die Vorderradlenkung eines Fahrzeugs in vereinfachter Darstellung. Die Figur 8 zeigt ein elektronisches Regelgerät als Blockschaltbild und die Figur 8 ein Diagramm.

## Beschreibung der Ausführungsbeispiele

In Figur 1 ist mit 10 eine Druckmittelquelle bezeichnet, welche einen konstanten Druck liefert, d. h. beim gesamten System handelt es sich um ein sogenanntes Konstantdrucknetz. Von der Druckmittelquelle 10 führt eine Druckleitung 11 über ein elektromagnetisch betätigbares Regelventil 12 und weiter über dieses zum linken Druckraum 13 eines Lenkzylinders 14, in dem ein Kolben 15 gleitend geführt ist. Vom rechten Druckraum 16 führt eine Leitung 17 über ein ebenfalls elektromagnetisch betätigbares 2/2-Wegeventil 18 zurück zur Druckleitung 11, wo sie stromabwärts des Regelventils 12 mündet, bezogen auf die Druckmittelquelle 10. Außerdem ist an die Leitung 17 zwischen dem Lenkzylinder 14 und dem Wegeventil 18 eine Rückleitung 19 angeschlossen, die über das Regelventil 12 zum Behälter 20 führt. Das Regelventil 12 ist als 4/3-Wegeventil mit den Schaltstellungen I bis III ausgebildet, wird durch einen Doppelhub-Elektromagneten 21 betätigt und hat unter Umständen einen Weggeber 22. Das Regelventil wird durch zwei einander entgegenwirkende Druckfedern 23, 24 in Neutralstellung gehalten, wenn keine Magnetkraft auf dieses einwirkt. Der Doppelhub-Elektromagnet 21 wird über eine elektrische Leitung 25 angesteuert, die einerseits mit dem Weggeber 22 in Verbindung steht, andererseits über eine elektrische Leitung 26 mit einem elektronischen Steuergerät 28, auf das weiter unten eingegangen ist.

Das Wegeventil 18 wird durch einen Elektromagneten 30 betätigt, der ebenfalls über eine elektrische Leitung 31 vom elektronischen Steuergerät 28 her angesteuert wird. Zwischen den beiden Leitungen 11 und 17 befindet sich nahe des Lenkzylinders 14 ein Differenzdrucksensor 32, welcher über eine elektrische Leitung 33 ebenfalls mit dem elektronischen Steuergerät 28 in Wirkverbindung steht. An der Kolbenstange 15A greift außerhalb des Lenkzylinders an einem Außengewinde 34 das Ritzel 35 des Lenkrads bzw. der Lenkstange 36 an. Am Lenkrad bzw. der Lenkstange ist ein Handkraftsensor 37 angeordnet, welcher über eine elektrische Leitung 38 mit dem elektronischen Steuergerät in Wirkverbindung steht.

Das elektronische Steuergerät 28 hat noch zwei Eingänge 40 für den Fahrerwunsch und 41 über die Fahrgeschwindigkeit des Fahrzeugs. Es umfaßt insbesondere eine Sicherheitsschaltung mit Selbstüberwachung 42, welche in Wechselwirkung steht mit einem Steuerteil 43.

Die Stellung II des Regelventils 12 ist die Neutralstellung, die Schaltstellungen I und III die Arbeitsstellungen.

Bei dem beschriebenen System erfolgt eine Regelung der am Lenkrad auftretenden Kräfte. Das vom Fahrer beim Lenken - also beim Einleiten einer Kurve - aufzubringende Lenkradmoment, welches vom Handkraftsensor 37 ermittelt wird, bildet den Istwert. Der Sollwert für das elektronische Steuergerät 28 wird über den Differenzdrucksensor 32, die Fahrgeschwindigkeit und dem Fahrerwunsch errechnet. Über zusätzliche Eingangsgrößen (Kraftsensor), Lenkgeschwindigkeitssensor usw. kann die Dynamik weiter verbessert und parasitäre Effekte ausgeregelt werden. Dazu ist zu bemerken, daß zwischen den beiden Druckräumen 13, 16 bei einem Lenkeinschlag unterschiedliche Drücke herrschen, also ein Differenzdruck - hervorgerufen durch die genannten Kräfte und die Steuerkanten am Regelventil 12. Über die stets vorhandene mechanische Rückwirkung, d. h. den mechanischen Kraftdurchgriff der an den zu lenkenden Rändern auftretenden Kräfte bis zum Lenkrad, wird dem Fahrer in Abhängigkeit von der Größe des jeweils vorliegenden Lenkmoments ein entsprechend kleineres, vorgebbares bewertetes Moment über das elektronische Steuergerät 28 und das Regelventil 12 am Lenkrad vermittelt.

Bei Ausfall der Steuerelektronik bzw. des Regelventils 12, schaltet das Wegeventil 18 über die Feder 18A in Durchflußstellung I (Ruhestellung), und es wird ohne Unterstützung gelenkt.

Das Regelventil 12 kann durch das Regelventil 12A - siehe Figur 1A - ersetzt werden. Nun wird in Mittelstellung dieses Regelventils eine Verbindung der beiden Druckräume 13 und 16 am Lenkzylinder erreicht, was einen erhöhten Sicherheitsaufwand bedeutet.

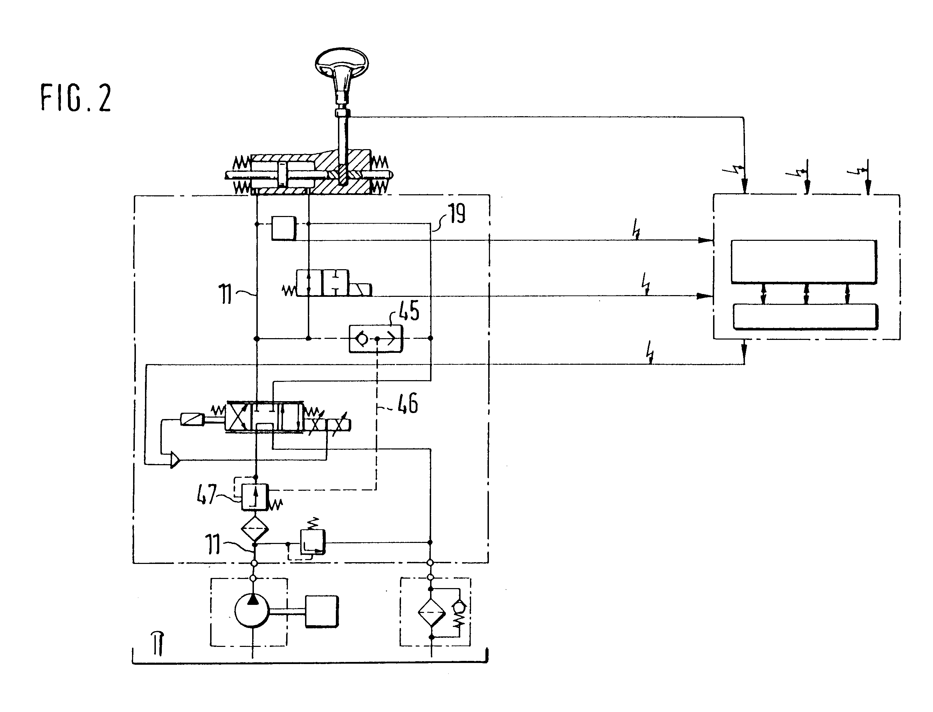

Das Ausführungsbeispiel nach Figur 2 unterscheidet sich von Obigem lediglich dadurch, daß zwischen die Leitungen 11 und 19 ein Wechselrückschlagventil 45 geschaltet ist, von welchem eine Steuerleitung 46 zu einem in der Druckleitung 11 angeordneten Druckwaage 47 führt. Über das Wechselrückschlagventil 45 wird der jeweils höhere Druck in den Leitungen 11, 19 an die Druckwaage 47 gebracht. Ansonsten ist die Funktion dieselbe wie oben beschrieben. Die Volumenstromversorgung erfolgt hier nicht aus einem Konstantdrucknetz.

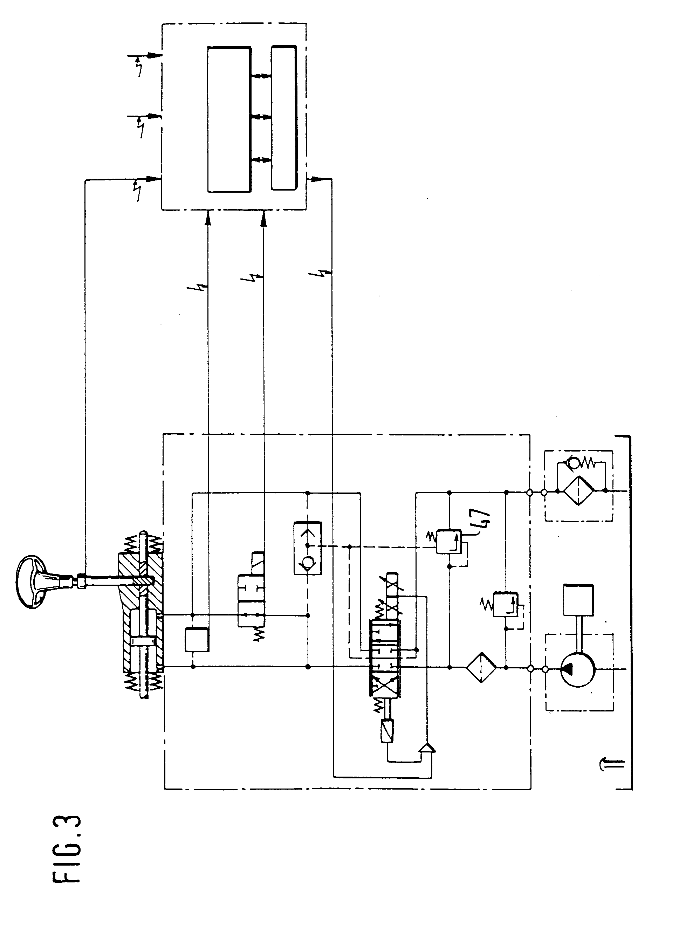

Beim Ausführungsbeispiel nach Figur 3 ist lediglich das Regelventil zum Tank geschaltet und die Druckwaage 47 anders angeordnet, so daß die hydraulischen Energieverluste geringer sind.

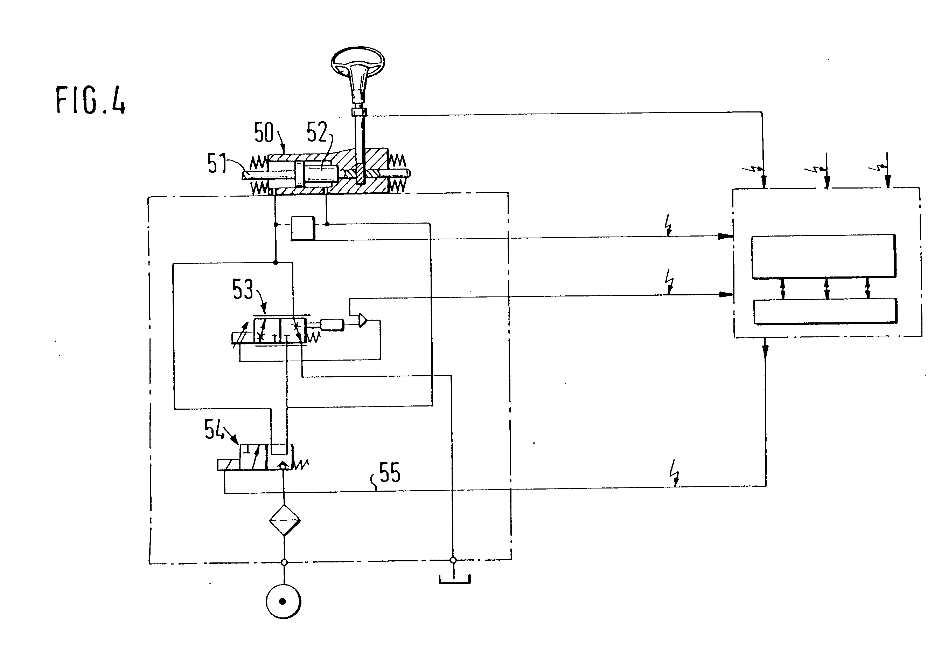

Beim Ausführungsbeispiel nach Figur 4 ist der Lenkzylinder etwas anders ausgebildet und trägt die Bezeichnung 50. Hier sind die beiden Kolbenstangen 51, 52 links und rechts des Kolbens mit unterschiedlichen Durchmessern ausgeführt, d. h. es handelt sich um einen Differentialkolben - was die andere Ausbildung des Regelventils bedingt, das nun die Bezeichnung 53 führt. Dem Regelventil ist noch ein 3/2-Wegeventil 54 vorgeschaltet, das wiederum nur rein schaltungstechnische Bedeutung hat; es wird über eine elektrische Leitung 55 ebenfalls vom elektronischen Steuergerät her angesteuert, ähnlich wie das Wegeventil 18 im Ausführungsbeispiel nach Figur 1.

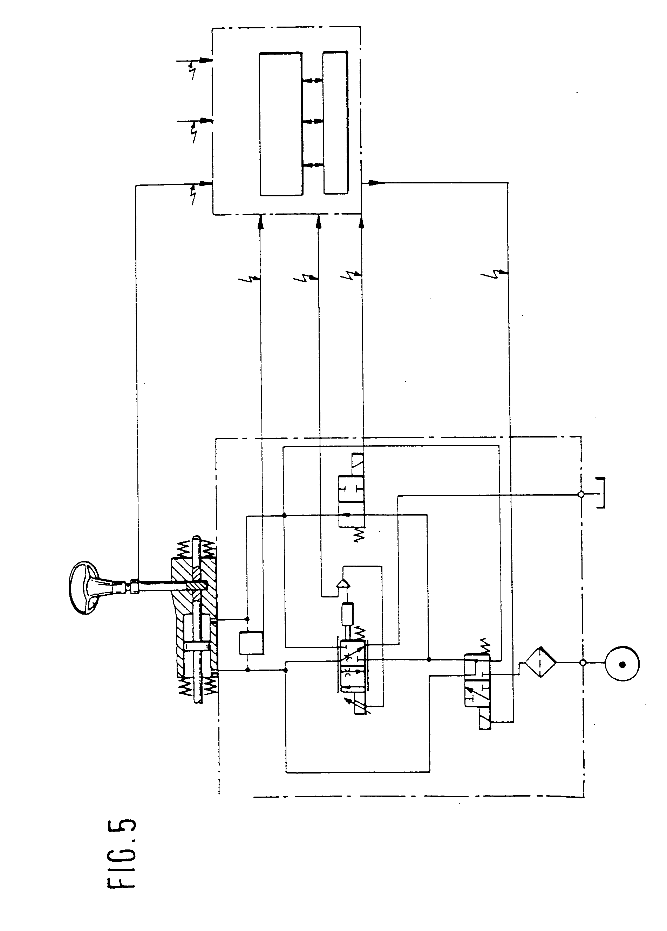

Es sind noch weitere schaltungstechnische Varianten denkbar, wie sie in den Figuren 5 bis 7 dargestellt sind, die lediglich ergänzend erwähnt sind und keiner weiteren Erläuterung bedürfen.

Die Figur 8 zeigt ein Blockschaltbild, das das elektronische Steuergerät 28 verdeutlicht. Ein der Lenkkraft proportionales Signal $F_L$ wird einer Schaltung 101 zugeführt. Dieses Signal kann z. B. durch Sensoren und/oder mit systeminternen Hilfsgrößen ermittelt werden. Die Ausgangsgröße der Schaltung 101 wird der Summationsstelle 103 mit negativem Vorzeichen zugeführt. Das vom Fahrer eines nicht dargestellten Fahrzeugs, das die erfindungsgemäße Servolenkung aufweist, beim Lenken am Lenkrad aufgebrachte Lenkradmoment $m_{LR}$ wird ebenfalls der Summationsstelle 103 über eine Leitung 104 zugeführt. Ferner nimmt ein geeigneter, nicht dargestellter Sensor die Fahrgeschwindigkeit $v_F$ des Fahrzeugs auf und liefert über eine Leitung 105 dementsprechende Informationen an die Bewertungsschaltung 101.

Über die Leitung 106 wird die Lenkkraft $F_L$ an den Eingang einer Dämpfungsschaltung 107 gegeben. Die Dämpfungsschaltung 107 ist ferner mit der Leitung 105 verbunden, so daß auch die Fahrgeschwindigkeit $v_F$ zugeführt wird.

Schließlich nimmt ein weiterer Sensor ein der Lenkgeschwindigkeit $v_L$ (Drehwinkel pro Zeiteinheit) proportionales Signal $v_L$ auf. Der Ausgang 108 der Dämpfungsschaltung 107 führt zu einer Multiplikationsstelle 109. Ferner ist eine Kennlinienschaltung 110 vorgesehen, die als Eingangsgröße 111 das Signal $v_L$ erhält und deren Ausgang 112 mit der Mulitplikationsstelle 109 verbunden ist. Der Ausgang 113 der Mulitplikationsstelle 109, der ein Dämpfungsmoment $m_d$ abgibt, führt - mit gleichem Vorzeichen wie Ausgang 2 der Bewertungsschaltung 101 - zur Summationsstelle 103.

An den Ausgang 114 der Summationsstelle 103 ist ein Regler 115 (Kennlinien-Regler) angeschlossen, dem insofern der am Ausgang 114 der Summationsstelle 103 vorliegende Wert als Regeldifferenz $r_d$ zugeführt wird. Der Ausgang 116 des Reglers 115 ist über eine Leitung 117 mit einer Summierstelle 118 verbunden.

Ferner ist ein Dynamik-Regler 119 vorgesehen, der als erste Eingangsgröße über eine Leitung 120 das Signal $F_L$ und als zweite Eingangsgröße über eine Leitung 121 das Lenkradmoment $m_{LR}$ erhält. Der Ausgang 122 des Dynamik-Reglers 119 ist als weitere Eingangsgröße an die Summierstelle 118 angeschlossen. Der Ausgang 123 der Summierstelle 118 steht mit einem Eingang 124 einer weiteren Summierstelle 125 in Verbindung. Der Summierstelle 124 wird - mit negativem Vorzeichen - ferner das Signal $v_L$ zugeführt. Dies erfolgt über eine Leitung 126.

Der Ausgang 127 der Summierstelle 125 ist an einen unterlagerten Regler für die Stelleinheit 128 angeschlossen. Dessen Ausgangswert 129 wird einer Linerarisierungsschaltung 130 zugeführt. Deren Ausgang 131 führt zu einem Steller 132, der steuerbare Halbleiter-Bauelemente aufweist. Dieser steuert ein Ventil 134 an, das die bereits erwähnte, jedoch nicht dargestellte Radtragkonstruktion über ein entsprechendes Lenkgetriebe beaufschlagt. Dem Steller 132 ist ein - nicht näher dargestellter - Stromregelkreis unterlagert.

Die erfindungsgemäße Einrichtung arbeitet folgendermaßen:

Treten durch den Lenkvorgang des Fahrers und/oder den Fahrzustand des Fahrzeugs Regeldifferenzen $r_d$ auf, so werden diese von dem Regler 115 erfaßt, der an seinem Ausgang 116 ein entsprechendes Ausgangssignal bildet. Dieses durchläuft dann die Summierstelle 118 und trifft auf die Summierstelle 125. Von weiteren, möglichen Ein-

flußgrößen (Lenkgeschwindigkeit $v_L$, Ausgangswert des Dynamik-Reglers 119) einmal abgesehen, wird die Ausgangsgröße des Reglers 115 dem unterlagerten Regler der Stelleinheit 128 zugeführt. Durch diesen Regler werden z. B. Haft- und Gleitreibungseffekte reduziert. Der Ausgangswert 129 gelangt zur Linearisierungsschaltung 130, die Nichtlinearitäten insbesondere des nachfolgenden Stellers 132 durch eine entsprechende Kennlinie oder aber durch einen Algorithmus berücksichtigt. Über den Ausgang 131 wird der Steller 132 derart angesteuert, daß dieser das Ventil 134 verstellt, so daß die zuvor erwähnte Regeldifferenz $r_d$ auf Null ausgeregelt wird.

Die Regeldifferenz $r_d$ setzt sich - ohne Betrachtung des Dämpfungsmoments $m_d$ - aus der Differenz des Lenkradmoments $m_{LR}$ und dem Signal $F_L$ zusammen, wobei letzteres von der Schaltung 101 bewertet wird. Die Schaltung 101 weist eine Kennlinienschar oder - nach einem nicht dargestellten Ausführungsbeispiel - einen Algorithmus auf, die bzw. der von dem Fahrzeugzustand und/oder dem Fahrzustand des Fahrzeugs abhängig ist. Als Fahrzeugzustandsabhängigkeit kommt beispielsweise die Beladung des Fahrzeugs in Betracht. Beim dargestellten Ausführungsbeispiel ist eine Abhängigkeit vom Fahrzustand des Fahrzeugs gezeigt, und zwar wird der am Ausgang 102 der Bewertungsschaltung 101 ausgegebene Wert von der Fahrgeschwindigkeit $v_F$ des Fahrzeugs beeinflußt (Zuführung der Fahrgeschwindigkeit $v_F$ durch die Leitung 105).

Aus der Figur 8 ist ersichtlich, daß die Regeldifferenz $r_d$ von dem Dämpfungsmoment $m_d$ beaufschlagt wird. Zur Erzeugung des Dämpfungsmoments $m_d$ ist die Dämpfungsschaltung 107 und die Kennlinienschaltung 110 sowie die Multiplikationsstelle 109 eingesetzt. Die Dämpfungsschaltung 107 erzeugt in Abhängigkeit von der $v_L$, $F_L$ und der Fahrgeschwindigkeit $v_F$ einen entsprechenden Dämpfungswert. Die Lenkgeschwindigkeit $v_L$ wird ferner mittels der Kennlinienschaltung 110 gewichtet. Dieses kann beispielsweise linear, progressiv oder degressiv erfolgen. Die Ausgangswerte der Kennlinienschaltung 110 und der Dämpfungsschaltung 107 werden an der Multiplikationsstelle 109 multipliziert und dann als Ergebnis (Dämpfungsmoment $m_d$) der Summationsstelle 103 als weitere Einflußgröße zugeleitet. Durch die Zuleitung der Lenkkraft $F_L$ zur Dämpfungsschaltung 107 erfolgt eine Einflußnahme im Hinblick auf die Betätigungsrichtung der Lenkung. Dieses bedeutet, daß der Dämpfungswert in Abhängigkeit davon eingestellt wird, ob die Lenkung von einer Geradeausfahrt in eine Kurvenfahrt oder von einer Kurvenfahrt in eine Geradeausfahrt betätigt wird.

Um dynamische Einflüsse sehr schnell erkennen und im Störungsfalle ausregeln zu können, ist der Dynamik-Regler 119 vorgesehen, der insbesondere störende Oberwelligkeiten des Lenkgetriebes und dergleichen eliminiert. Ferner dämpft er die dominanten Eigenfrequenzen des Systems.

Die erfindungsgemäße Servolenkung besitzt ausgezeichnete Rücklaufeigenschaften. Für den nach Kurvenfahrt selbsttätig erfolgenden Rücklauf sei angenommen, daß der Fahrer das Lenkrad losläßt. In diesem Falle nimmt das Lenkradmoment $m_{LR}$ den Wert "Null" an. Da beim Rückstellen das Lenkradmoment $m_{LR}$ den Sollwert und das Signal $F_L$ den Istwert bildet, ist die Lenkkraft $F_L$ bestrebt, den Wert "Null" anzunehmen, da bei einer Regelung der Istwert stets bestrebt ist, den Wert des Sollwerts anzunehmen. Mithin wird sich die Lenkkraft $F_L$ ebenfalls auf den Wert "Null" einstellen, d. h. es liegt dann Geradeausfahrt des Fahrzeugs vor.

Umgekehrte Verhältnisse ergeben sich bei einem Lenkvorgang des Fahrers. Der Fahrer gibt ein bestimmtes Lenkradmoment $m_{LR}$ als Istwert vor, dem sich die Lenkkraft $F_L$ als zunächst davon abweichender Sollwert während der Regelphase anpaßt.

Da bei der erfindungsgemäßen Servolenkung auftretende Lenkkräfte $F_L$ ausgeregelt werden, werden sich über die mechanische Rückwirkung zum Lenkrad auch am Lenkrad die entsprechenden Kräfte einstellen, wobei - je nach Kennlinie- oder Algorithmusausbildung sowie sonstige Einflußnahme - die am Lenkrad auftretenden Kräfte auf gewünschte, vorgebbare Werte eingestellt werden können. Hierbei ist es sogar möglich, fahrerindividuelle Einstellungen vorzunehmen. Insbesondere können die am Lenkrad aufzubringenden Kräfte für eine Fahrerin kleiner eingestellt werden als für einen Fahrer.

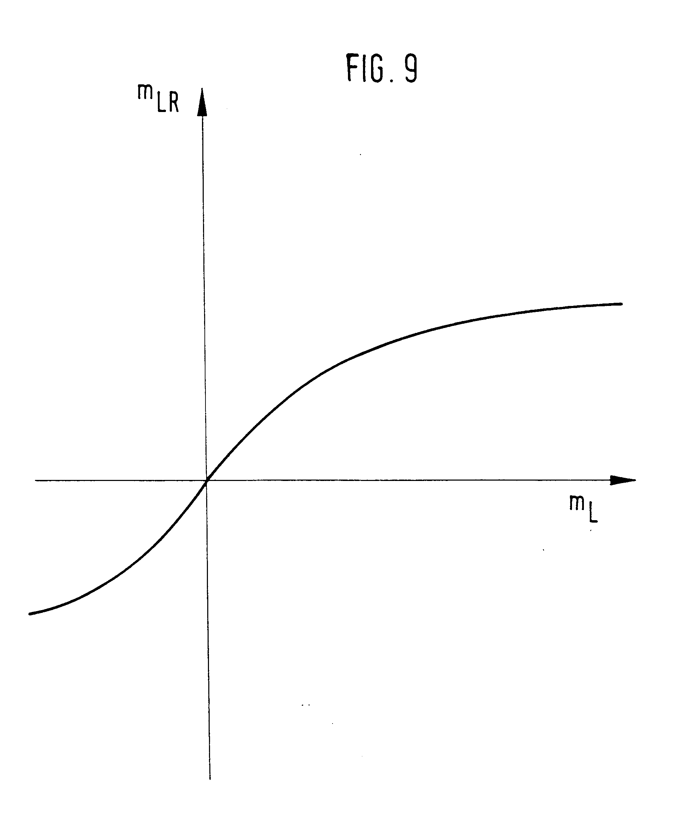

Überdies besteht eine extrem gute Schwingungsdämpfung bei der erfindungsgemäßen Anordnung. Während im Stand der Technik durch die erfolgende Verstärkung der Lenkradkraft bereits kleine Änderungen der Lenkkraft zu großen Änderungen des Lenkmoments führen, was stets ein Schwingungsneigung mit sich bringt, wird - gemäß Figur 9 - bei einer Änderung der Lenkkraft $F_L$ - (Abszisse) nur eine relativ kleine Änderung des Lenkradmoments $m_{LR}$ (Ordinate) erfolgen, da die Kennlinie einen degressiven Verlauf aufweist. Im Zusammenhang mit dem erfindungsgemäßen Regelprinzip ist ein schwingungsarmes System gegeben.

Die erfindungsgemäße Lösung zeichnet sich durch eine besondere Art der Kennlinienverarbeitung für die Dämpfung und die Hilfskraftunterstützung aus. Dabei liegt eine Trennung des Stör- und des Führungsverhaltens der Regelung mittels des Dynamik-Reglers 119 und des Kennlinien-Reglers 115 vor. Insofern läßt sich weitgehend unabhängig das Führungs- und Störverhalten einstellen. Die Dämpfung ist drehrichtungs- bzw. betätigungsabhängig mittels der Zuführung der Lenkkraft $F_L$ zur Dämpfungsschaltung 107 beeinflußbar. Ferner können ideale Lenkkraftbegrenzungskennlinien mittels der Bewertungsschaltung 101 vorgegeben werden. Aufgrund der vom proportionalen Signal $V_L$ abhängigen Dämpfung ist ein dynamischer Eingriff gegeben. Eine "statische" Variation der Lenkhilfe erfolgt durch die Berücksichtigung der Fahrgeschwindigkeit $v_F$. Insofern ermöglicht die nach dem erfindungsgemäßen Regelprinzip arbeitende Servolenkung ein schwingungsarmes, fahrtechnisch gefühlvolles und direktes Lenkverhalten.

## Patentansprüche

1. Servolenkeinrichtung für ein Fahrzeug, insbesondere Personen- oder Lastkraftwagen, mit einem hydro-mechanischen Servoantrieb, der die zu lenkenden, an einer Radtragkonstruktion gelagerten und von einem doppelt wirkenden Lenkzylinder (14) betätigten Räder anlenkt, der über ein Regelventil (12) angesteuert wird und der mit einem Lenkrad (36) des Fahrzeugs zusammenwirkt, wobei an der Lenksäule ein elektrischer Handkraftsensor (37) angeordnet ist, der mit einem elektronischen Steuergerät (28) in Wirkverbindung steht, dadurch gekennzeichnet, daß die beiden Druckräume (14, 16) durch eine Leitung miteinander verbunden sind, in welcher ein Differenzdrucksensor (32) angeordnet ist, der die Druckdifferenz zwischen den beiden Zylinderseiten bei einem Lenkvorgang ermittelt und dem elektronischen Steuergerät signalisiert, das wiederum ein Signal zur Betätigung des Regelventils (12) abgibt.

2. Lenkeinrichtung nach Anspruch 1, dadurch gekennzeichnet, daß der Hydraulikteil von einer Konstantdruckquelle (10) versorgt wird.

3. Lenkeinrichtung nach Anspruch 1 und/oder 2, dadurch gekennzeichnet, daß das Regelventil elektromagnetisch betätigbar ist und außerdem einen Wegsensor (22) aufweist, und daß sein Elektromagnet (21) unter Signalverarbeitung des Wegsensors vom elektronischen Steuergerät (28) angesteuert wird.

4. Lenkeinrichtung nach einem der Ansprüche 1 bis 4, dadurch gekennzeichnet, daß dem Regelventil ein elektromagnetisch betätigbares Wegeventil (18) nachgeschaltet ist, das bei Ausfall der Steuerelektronik bzw. des Regelventils derart geschaltet wird, daß die Lenkeinrichtung nun lediglich mechanisch betätigbar ist.

5. Lenkeinrichtung nach einem der Ansprüche 1 bis 4, dadurch gekennzeichnet, daß das elektronische Steuergerät (28) eine Sicherheitsschaltung mit Selbstüberwachung (42) aufweist sowie ein mit dieser in Wechselwirkung stehendes Steuerteil (43), daß dem elektronischen Steuergerät der Fahrerwunsch, die Fahrgeschwindigkeit und über den Handkraftsensor (37) das Lenkradmoment eingegeben wird sowie über den Differenzdrucksensor die Druckdifferenz in den beiden Zylinderräumen, und daß das elektronische Steuergerät mindestens das Regelventil (12) ansteuert.

6. Lenkeinrichtung nach Anspruch 1 und 5, dadurch gekennzeichnet, daß das elektronische Steuergerät (28) einen Regler (115) aufweist, dem zur Bildung einer Regeldifferenz ($r_d$) auch ein vom Fahrer beim Lenken aufzubringendes Lenkradmoment ($m_{LR}$) und eine Lenkkraft $F_L$ zugeführt wird, wobei die Lenkkraft ($F_L$) dem zwischen dem Servoantrieb und der Radtragkonstruktion auftretende Betätigungsmoment entspricht und die am Lenkrad auftretenden Kräfte unter Berücksichtigung der mechanischhydraulischen Rückwirkung auf vorgebbare Werte geregelt werden.

7. Lenkeinrichtung nach Anspruch 6, dadurch gekennzeichnet, daß die Werte für das Lenkradmoment ($m_{LR}$) in Abhängigkeit vom Fahrzeug- und/oder Fahrzustand mittels einer Kennlinienschar und/oder eines Algorithmus' einer Bewertungsschaltung (101) beeinflußt werden.

8. Lenkeinrichtung nach einem der Ansprüche 6 und 7, dadurch gekennzeichnet, daß das vom Fahrer beim Lenken aufzubringende Lenkradmoment ($m_{LR}$) einen Istwert und das Lenkkraft ($F_L$) einen Sollwert für den Regler (115) bildet.

9. Lenkeinrichtung nach einem der Ansprüche 6 bis 8, dadurch gekennzeichnet, daß beim selbsttätigen Rücklauf der Lenkung die Lenkkraft ($F_L$) den Istwert und das Lenkradmoment ($m_{LR}$) den Sollwert für den Regler (115) bildet.

10. Lenkeinrichtung nach einem der Ansprüche 6 bis 9, dadurch gekennzeichnet, daß die Beeinflussung der Bewertungsschaltung (101) von der Fahrgeschwindigkeit ($V_F$) des Fahrzeugs abhängig ist.

11. Lenkeinrichtung nach einem der Ansprüche 6 bis 10, dadurch gekennzeichnet, daß die Bewertungsschaltung (101) als Eingangsgröße die Lenkkraft ($F_L$) erhält und als Ausgangsgröße (Ausgang 102) ein Kennlinien-Moment abgibt, das zur Bildung der Regeldifferenz ($r_d$) einer Summationsstelle (103) zugeführt wird.

12. Lenkeinrichtung nach einem der Ansprüche 6 bis 11, gekennzeichnet durch eine Dämpfungsschaltung (107), die der Summationsstelle (103) ein die Regeldifferenz ($r_d$) beeinflussendes Dämpfungsmoment ($m_d$) zuführt.

13. Lenkeinrichtung nach einem der Ansprüche 6 bis 12, dadurch gekennzeichnet, daß der Dämpfungsschaltung zur Beeinflussung des Dämpfungsmoments ($m_d$) der Lenkkraft ($F_L$) und/oder das der Lenkgeschwindigkeit proportionale Signal ($V_L$) und/oder die Fahrgeschwindigkeit ($V_F$) und/oder weitere Größen zugeführt werden.

# FIG.1

# FIG.1A

EP 0 472 878 A1

FIG.2

FIG.3

FIG.4

EP 0 472 878 A1

FIG.5

FIG.6

EP 0 472 878 A1

FIG. 7

EP 0 472 878 A1

FIG.8

FIG. 9

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,Y | EP-A-0 093 416 (NISSAN MOTOR)<br>* Seite 38, Zeile 18 - Seite 40, Zeile 3; Anspruch 5; Figur 12 * * Seite 45, Zeile 11 - Seite 49, Zeile 15; Figur 13 *<br>– – – | 1,3,5-7, 10,11,8,9, 12,13 | B 62 D 5/06 |
| Y | DE-A-3 542 079 (MANNESMANN REXROTH)<br>* Spalte 4, Zeilen 5 - 20; Figur 1 * * Spalte 4, Zeile 62 - Spalte 5, Zeile 19 * * Spalte 6, Zeilen 29 - 58 * * Spalte 7, Zeile 55 - Spalte 8, Zeile 1; Figur 2 * * Spalte 4, Zeilen 42 - 46 * * Spalte 5, Zeilen 60 - 66 *<br>– – – | 1-5 | |
| Y | US-A-4 940 103 (MOMIYAMA)<br>* Spalte 5, Zeile 45 - Spalte 6, Zeile 13; Figur 5 *<br>– – – | 1-5 | |
| Y | DE-A-1 806 699 (KOMBINAT FORTSCHRITT)<br>* Seite 6, Zeilen 15 - 17; Figur 1 *<br>– – – | 2 | |
| A | GB-A-2 179 012 (HONDA GIKEN KOGYO)<br>* Ansprüche 1-5 *<br>– – – | 8 | |
| P,Y | EP-A-0 416 266 (ROBERT BOSCH)<br>* Ansprüche 3, 4 *<br>– – – | 8,9 | RECHERCHIERTE SACHGEBIETE (Int. Cl.5) |
| Y | GB-A-2 206 321 (FUJI JUKOGYO)<br>* Seite 7, Zeilen 3 - 22; Figur 10 *<br>– – – – – | 12,13 | B 62 D |

Der vorliegende Recherchenbericht wurde für alle Patentansprüche erstellt

| Recherchenort | Abschlußdatum der Recherche | Prüfer |
|---|---|---|
| Berlin | 21 Oktober 91 | BROYDE M P |